# EUROPÄISCHE PATENTSCHRIFT

(11) **EP 0 820 677 B1**
(45) Veröffentlichungstag und Bekanntmachung des Hinweises auf die Patenterteilung: **09.01.2002**
(21) Anmeldenummer: 96909022.4
(22) Anmeldetag: 09.04.1996
(51) Int. Cl.: H04M 3/50, H04N 7/52, H04N 7/14

(54) **VERFAHREN UND EINRICHTUNG ZUM SPEICHERN, SUCHEN UND ABSPIELEN VON INFORMATIONEN EINES MULTIMEDIA-ELEKTRONISCHEN-POSTSYSTEMS**
METHOD AND DEVICE FOR STORING, SEARCHING FOR AND PLAYING BACK DATA IN A MULTIMEDIA E-MAIL SYSTEM
PROCEDE ET DISPOSITIF POUR LA MEMORISATION, LA RECHERCHE ET LA REPRODUCTION D'INFORMATIONS D'UN SYSTEME DE COURRIER ELECTRONIQUE MULTIMEDIA

(30) Priorität: 13.04.1995 DE 19514102
(43) Veröffentlichungstag der Anmeldung: 28.01.1998
(73) Patentinhaber: SIEMENS AKTIENGESELLSCHAFT, 80333 München (DE)
(72) Erfinder: SEBESTYEN, Istvan, D-81476 München (DE)
(86) Internationale Anmeldenummer: DE9600617
(87) Internationale Veröffentlichungsnummer: WO9632802

(56) Entgegenhaltungen:
- EP-A- 0 523 629
- EP-A- 0 535 890
- EP-A- 0 630 141
- WO-A-96/03837
- OPTICAL ENGINEERING, Bd. 35, Nr. 1, Januar 1996, US, Seiten 109-112, XP000579001 R.A.SCHAPHORST: "STATUS OF H.324-"
- PROCEEDINGS TENCON 93-IEEE REGION 10 CONFERENCE ON COMPUTER, COMMUNICATION, CONTROL AND POWER ENGINEERING, Bd. 1, 19. - 21.Oktober 1993, BEIJING, Seiten 70-73, XP000463232 PETER TSANG ET AL: "THE MULTIMEDIA INFORMATION LINK CONTROL"
- NTZ NACHRICHTENTECHNISCHE ZEITSCHRIFT, Bd. 44, Nr. 12, Dezember 1991, BERLIN DE, Seiten 880-883, XP000275399 RALF HINZ: "KOMMUNIKATIONSPROTOKOLL FUR BILDTELEFON-ENDEINRICHTUNGEN"

## Beschreibung

Das Speichern und das Abspielen von Multimedia Informationen (Video-, Audio-, Daten-, Steuerinformationen) auf digitalen Speichermedien ist eine der wichtigsten Funktionen in einem Multimedia-Elektronischen-Postsystem, das auch elektronisches Multimedia-Postsystem genannt wird. In einem Multimedia-Elektronischen-Postsystem verfügt jeder Teilnehmer über ein eigenes elektronisches Postfach - Mailbox genannt -, in dem von anderen Postteilnehmern gesendete Mitteilungen als multimediale Postnachrichten abgelegt werden. Jeder Teilnehmer kann die eigene multimediale Post aus seinem Postfach zu einem beliebigen Zeitpunkt abrufen.

In "Kommunikationsprotokoll für Bildtelefon-Endeinrichtungen", Ralf Hinz, NTZ - Nachrichtentechnische Zeitschrift, Bd. 44 (1991), Heft 12, Seite 880-883 ist ein Kommunikationsprotokoll für eine Verarbeitung und Übertragung von Sprache und Bewegungsbildern als Daten beschrieben. Die Daten werden am Endgerät ver- bzw. entschlüsselt und gemultiplext bzw. demultiplext.

Die Elektronischen Postfächer werden auf großen digitalen Massenspeichern eingerichtet. Obwohl die Kapazität der speicherbaren Informationen auf digitalen Speichermedien stetig wächst, stellt die große Datenmenge von Multimedia-Informationen immer noch ein massives Speicherproblem dar.

Das erfindungsgemäße Verfahren führt gegenüber den bekannten Verfahren zu einer wesentlich höheren Kompression und zu einem effektiveren Multiplexen von multimedialen Datenströmen in einem Multimedia-Elektronischen-Postsystem (s. Tabelle 1).

Dagegen benötigt das als MPEG-1 (ISO/IEC 11172) bekannte Verfahren mit 1,5 Mbits/s für die Speicherung einer multimedialen Nachricht von einer Minute etwa 11 Mbyte Speicherplatz. Vom Speichervolumen gesehen sind die zur Zeit bekannten Verfahren für Multimedia-Elektronische-Post in der Praxis kaum geeignet.

**Tabelle 1 -**

| Beispiele für die Speicherung von Multimedia-Post Nachrichten | | | | |
|---|---|---|---|---|
| **Medium:** | **Speicher Volumen (MByte):** | **Abspieldauer bei 32 kbit/s-Standard QCIF (180 x 144) Bildauflösung von H.263;** **G.723.1; 64kbit/s Audio** | **Abspieldauer bei 128 kbit/s nicht-standard CIF (360 x 288) Bildauf- lösung von H.263;** **G.723.1; G.728; G.729 Audio** | **Abspieldauer bei 512 kbit/s nicht-standard ITU-R 601** **(720 x 576) Bildauflösung von H.263;** **G.728, G.729; G.722 Au- dio; ISO/IEC 11172-3** |
| Festplatte / Minute (Durchschnitt für eine Multimedia-Post-Nachricht | - | etwa 240 kByte/min | etwa 1 MByte/min | etwa 4 MByte/min |
| Beispiel-Festplatte: | 1.000 | etwa 4.000 MM-Nachrichten | etwa 1.000 MM-Nachrichten | Etwa 250 MM-Nachrichten |

Ein weiterer Vorteil erfindungsgemäßer Video- und Audio- Verfahren gegenüber bekannten Verfahren ist, daß es sich um "symmetrische Realzeit Kompression/Dekompressionsverfahren" handelt. Die Symmetrie gilt sowohl für die Komplexität des Koders, bzw. des Dekoders, als auch für das Zeitverhalten der Kodierung und Dekodierung (d.h. die Komplexität des Koders und des Dekoders sind etwa gleich, bzw. der Zeitaufwand für die Kodierung und Dekodierung sind auch etwa gleich und zeitgleich).

Die Qualität des MPEG-1 Videos und der MPEG-1 Audio ist zwar besser als die der in der Tabelle 1 aufgelisteten Verfahren, jedoch handelt es sich dabei um asymmetrische Verfahren, die eine langwierige und komplizierte Kodierung benötigen. Ein Vorteil wäre nur in der einfacheren Dekodierung zu sehen. Es gibt jedoch zahlreiche Anwendungen, bei denen eine verminderte Video- und Audio-Qualität vollkommen ausreicht (z.B. Multimedia-Post, Video-Bilder mit Kopf und Schulter), bei denen aber eine Realzeit-Kodierung/Dekodierung bei etwa gleicher Kodierer-/Dekodierer-Komplexität benötigt wird.

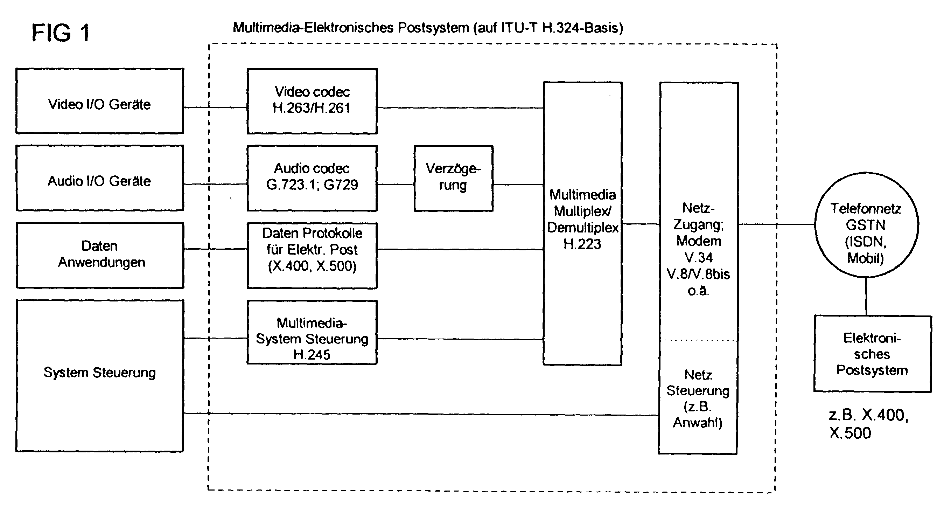

Als Terminal für elektronische Multimedia-Post wird ein ITU-T H.324-Bildtelefon-Gerät vorgeschlagen (Figur 1). Ein Vorteil des Bildtelefon-Terminals liegt darin, daß es bereits Elemente des Systems wie z.B. Audio-, Video-Codec, Multimedia-Multiplexer, Multimedia-Steuerung beinhaltet, die dem elektronische Multimedia-Postsystem zugute kommen. Zwar ist das H.324-Bildtelefon auf ein GSTN, also ein analoges Telefonnetz zugeschnitten. Die Erfindung ist jedoch auch auf andere Netze, insbesondere Mobile Kommunikationsnetze und ISDN-Netze anwendbar. Für den Terminal-Zugang zum elektronischen Multimedia-Postsystem wird im H.324 Bildtelefon - neben dem Video-, Sprache- und H.245 Bildtelefon Steuerungskanal - ein zusätzlicher Datenkanal eröffnet. Dieser Datenkanal dient zur Ansteuerung und zur Kommunikation zwischen dem Terminal des elektronischen Multimedia-Postsystems und dem Elektronischen Postsystem. In diesem Datenkanal werden z.B. die X.400-bzw. X.500-Befehle mit Hilfe von X.400- und X.500-Protokollen ausgetauscht und das elektronische Multimedia-Postsystem bedient.

Nach dem Verbindungsaufbau zwischen einem Terminal und dem multimedialen elektronischen Postsystem müssen beide Endeinheiten gegenseitig Signalisieren (z.B. mit Hilfe von ITU-T H.245), ob das eine Bildtelefon gleichzeitig auch ein Terminal für das Multimedia-Elektronische-Postsystem ist, und ob die andere Endeinheit das Multimedia-Elektronische-Postsystem ist. Falls ja, wird mit Hilfe von ITU-T H.245 entweder ein zusätzlicher Datenkanal für die Bedienung des Multimedia-Elektronischen-Postsystems eröffnet, oder im Audiokanal die Steuerung des Multimedia-Elektronischen-Postsystems mit Hilfe von hörbaren DTMF-Signalen gesteuert.

Über diesen Datenkanal wird vom Terminal die Anwahl (Login des Benutzers) an das Elektronische Postsystem und die Passworteingabe betätigt.

Wird der Benutzer der elektronischen Post vom System als zugriffsberechtigt akzeptiert, so kann er unterschiedliche Postsystem-Funktionen ausführen, z.B. das eigene elektronische Postfach auf neue Multimedia-Informationen abfragen und diese Abrufen, sofern welche vorliegen.

Beim Abruf ist das elektronische Postsystem der Sender. Die benötigten Multimedia-Kanäle werden auch hierzu unter Verwendung eines Verfahrens gemäß H.245 ausgewählt und angesteuert. Das empfangende Multimedia Terminal (Bildtelefon) zeigt zeitgleich z.B. das Videobild an und gibt die zugehörige Sprachinformation aus.

Beim Absenden einer multimedialen Nachricht werden die benötigten Multimedia-Kanäle mit Hilfe einer Prozedur gemäß ITU-T H.245 im separaten Multimedia-Steuerkanal eröffnet. Danach wird im separaten Steuerkanal für das Multimedia-Elektronische-Post die Adresse des Adressaten eingegeben. Danach dient das Bildtelefon-Terminal als Eingabemittel für die Multimedia-Elektronische-Post. In der Regel nimmt eine Kamera das Bild auf, ein Mikrofon den Ton bzw. die Stimme des Sprechers auf und der H.223-Multiplexer setzt die Video- und Audio-Informationen zusammen. Das Multimedia-Elektronische-Postsystem speichert die Multimediapost im gewünschten Postfach des Empfängers ab.

Die Erfindung macht sich vorzugsweise - abhängig von den einzelnen Realisierungsformen und Besonderheiten - die folgenden Informationstechnologie- und/oder Kommunikationstechnologie-Standards zunutze:
- Die in der ITU-T gegenwärtige Normierung von Sprachkodierern mit sehr niedriger Bitraten für das Bildfernsprechen (ITU-T G.723) im öffentlichen Telefonwählnetz (GSTN) führt zu qualitativ guten Sprachkodierern (annähernd der Qualität der CCITT G.726 Empfehlung) mit Übertragungsgeschwindigkeit von 5,3-6,3 kbit/s. Auch das ITU-T G.729 Sprachkoder ermöglicht eine digitale Sprachübertragung mit 8 kbit/s Geschwindigkeit. In der Zukunft wird auch ein 4 kbit/s Koder standardisiert (ITU-T G.4kbit/s).
- Die in der ITU-T gegenwärtige Normierung von Bewegtbildkodierern mit sehr niedriger Bitraten z.B. für das Bildfernsprechen im öffentlichen Telefonwählnetz (ITU-T H.263) führt zu qualitativ guten (QCIF Auflösung (180 x 144) und weniger) Bewegtbildkodierern mit der zweckmäßigen Übertragungsgeschwindigkeit von 8-24 kbit/s oder einer noch höheren Übertragungsgeschwindigkeit, die eine gesicherte Übertragungsart (z.B. mit ITU-T H.223) erfordern. Eine Erhöhung der Bildauflösung über die im Standard definierten Werte, z.B. auf CIF (360 x 288) oder ITU-T 601 (720 x 576), erlaubt die Übertragung von Bewegtbildern mit Fernseh- bzw. mit Digital-Studioqualität.
- Die gegenwärtige ITU-T-Normierung von Multiplexern (ITU-T H.223) der audiovisuellen Informationstypen mit sehr niedriger Bitraten, z.B. für das Bildfernsprechen im öffentlichen Telefonwählnetzen mit Übertragungsgeschwindigkeit von 9,6-32 kbit/s oder höher, ermöglicht eine gesicherte Übertragungsart (H.223).
- Die gegenwärtige ITU-T-Normierung (ITU-T H.245) bezüglich dem Steuern von audiovisuellen Datenarten mit sehr niedriger Bitraten, beispielsweise für das Bildfernsprechen im öffentlichen Telefonwählnetzen, die eine flexible Zuordnung von bis zu 15 unabhängigen Nutzkanälen, jeweils mit Audio-/Sprache-, Video- oder Dateninformation ermöglicht. Jeder Kanal verfügt über eine flexible Bandbreite, die von Anwendung zu Anwendung im Laufe der Multimedia-Elektronischen-Postanwendung beliebig variieren kann.
- Die abgeschlossene Standardisierung der ITU-T für elektronische Post (Empfehlungen der ITU-T X.400-er und ITU-T X.500-er Serie).

Das Blockdiagramm eines Ausführungsbeispiels eines erfindungsgemäßen Multimedia-Elektronischen-Postsystems ist in Figur 1 dargestellt.

Ein multimediales elektronisches Postsystem besteht aus mehreren Funktionseinheiten. Die Video-I/O-Geräte (Input/Output) enthalten z.B. eine Kamera, einen Bildschirm und eine Bildaufbereitungseinheit für das Einblenden von mehreren Bildern ("split-screen"). In einer günstigen Ausgestaltung können alle Geräte tatsächlich angeschlossen werden. Die Audio/Sprach-I/O-Geräte schließen das Mikrofon (oder mehrere), den Lautsprecher (oder mehrere), und die Audio/Sprachaufbereitungs-einheit (z.B. für Echounterdrückung) ein. Auch hier können in einer günstigen Ausgestaltung alle Geräte tatsächlich angeschlossen sein. Die Systemsteuerung steuert das Gesamtsystem, d.h., sie sorgt für die Multimedia-Steuerung für den Multimedia-Multiplexer und für die gesamte Multimedia-System-Steuerung. Der Video-Codec sorgt für die digitale Kompression und Dekompression des Videosignals beim Video-Enkoder bzw. Video-Dekoder. Der Audio/Sprach-Codec sorgt für die digitale Kompression/Dekompression des Audio/Sprachsignals. Eine wahlweise Verzögerung des Sprachsignals wird benutzt um die Lippen-Synchronisation zwischen Video und Sprache zu erreichen. Der Multiplexer/Demultiplexer legt beim multimedialen Abspeichern die Audio-, Video- und Datensignale zu einem gemeinsamen Datenstrom zusammen bzw. extrahiert beim Abruf aus dem multimedialen elektronischen Postfach aus dem gemeinsamen multimedialen Datenstrom getrennte Audio-, Video- und Datensignale.

Die Systemsteuerung besteht aus der Steuerung der Multimedia-Multiplexing (nach ITU-T H.245), und des gesamt Multimedia-Elektronischen-Postsystems.

Bei der Multimedia-Multiplexing nach ITU-T H.245 kann man bis zu 15 Nutzkanäle eröffnen und benutzen. Vor dem Abspeichern der Nutzkanäle erfolgt nach H.245 eine Aushandlung und Einstellung der Benutzerparameter. Dabei signalisiert der Datenspeicher der elektronischen Post die breiteste Möglichkeit der Speicherung von multimedialen Informationen, und es ist die speichernde Anwendung die letztendlich entscheidet und die Auswahl trifft, welche Multimediale Kanäle eröffnet werden sollen und wie die multimediale Speicherung im Datenspeicher erfolgen soll.

Bei der Speicherung einer typischen audiovisuellen Nachricht ("Multimedia Post") werden beispielsweise ein Kanal für Video, ein Kanal für Sprache, ein Datenkanal für die Multimedia-Post-Steuerung (Adressieren, Zeit des Multimedia-Post-Ablegens u.s.w.) und der obligatorische ITU-T H.245 Multimedia-Steuerkanal eröffnet.

Auch vor dem Abspielen der Nutzkanäle aus dem elektronischen Postfach erfolgt eine Aushandlung und Einstellung der Benutzerparameter nach ITU-T H.245. Dabei signalisiert das Multimedia-Elektronische-Postsystem die breiteste Möglichkeit der Speicherung von multimedialen Informationen, und es ist wiederum die abspielende Anwendung die letztendlich entscheidet und die Auswahl trifft, welche Multimediale Kanäle eröffnet werden sollen und wie das multimediale Abspiel aus dem Postsystem erfolgen soll.

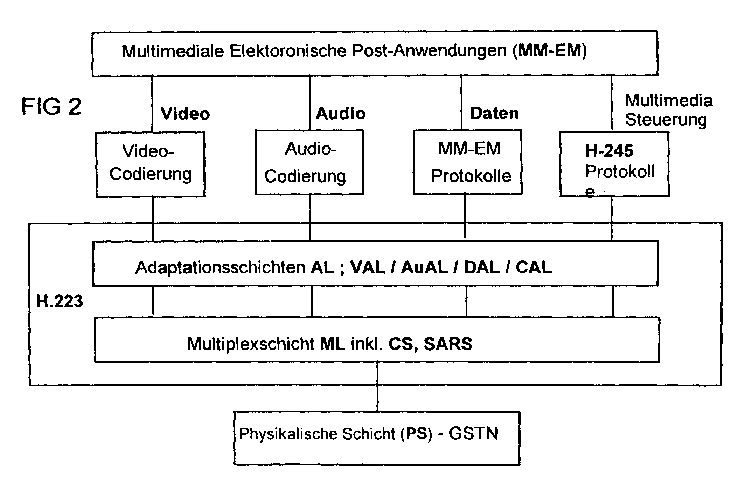

Das Multimedia-Multiplexing ist in Figur 2 dargestellt. Die unterste Schicht (PS) ist die physikalische Schicht. Diese stellt den Netzübergang, also das Interface zwischen dem Bildtelefon Multimedia-Multiplexing und dem Netz (GSTN, aber im Prinzip auch andere Netze, wie ISDN und Mobile Netze) dar. Der Multiplexer verfügt über zwei Schichten: Eine sog. Adaptations-Schicht ("Adaptation Layer" - AL) und eine Multiplex-Schicht ("Multiplex Layer" - ML). Die Adaptations-Schicht ist zuständig für die Anpassung der diversen Informationsströme - die von den verschieden Media-Quellen (Video, Audio/Sprache, Daten) stammen - an die MUX Schicht. In Figur 2 sind vier Adaptations-Schichten spezifiziert: Daten-Adaptations-Schicht ("Data Adaptation Layer" - DAL), Audio/Sprach-Adaptations-Schicht ("Audio Adaptation Layer" - AuAL), Video-Adaptations-Schicht ("Video Adaptation Layer" - VAL) und Steuerungs-Adaptations-Schicht ("Control Adaptation Layer - CAL) zur Übertragung von Multimedia-Steuer-Daten.

Jede Adaptations-Schicht bedient sich Funktionen des Mux-Layers: Eine sog. Konvergenz-Unterschicht ("Convergence Sublayer" - CS) und eine sog. Segmentierung-/ Zusammensetzungs-Unterschicht ("Segmentation and Reassembly Sublayer" - SARS). Die Konvergenz-Unterschicht CS sorgt für Fehlererkennung, und (wo es erwünscht wird) für die Fehlerkorrektur. Der SARS sorgt für die Fragmentierung der Datenströme in sog. SAR-SDUs ("SDU - Service Data Unit"), zugeschnitten für die MUX Schicht.

Über der Video-Adaptionsschicht befindet sich der Video-Codec (Video) der die Videoinformationen codiert bzw. decodiert. Über der Audio-Adaptionsschicht befindet sich der Audio-Codec Audio der die Audio-Informationen codiert bzw. Decodiert. Über der Daten-Adaptionsschicht Daten befinden sich die für die Datenanwendung "Elektronische Post" notwendige Datenprotokolle. Ein getrennter, spezieller Datenkanal den ITU-T H.245-Multimedia-Steuerungs-Protokollen zugeordnet.

Die Adaptionsschichten zeigen beim Speichern in das elektronische Postsystem Übertragungsfehler an, es werden Fehlerkorrekturen veranlaßt, ferner fragmentieren die Adaptionsschichten die Informationsströme in kleinere Einheiten. Die MUX-Schicht sorgt für das Multiplexen der verschieden Informationstypen, die von den Adaptionsschichten vorbereitet werden. Ferner wird die Segmentierung/Reassemblierung der Daten durchgeführt.

Die MUX Schicht sorgt beim Zugreifen/Abspielen der Multimedia-Nachricht aus dem elektronischen Postsystem für das Demultiplexen des angekommenen Datenstromes in Datenfragmente der verschiedenen Informationstypen, die an die jeweils zuständigen Adaptionsschichten weitergeleitet werden. Die Adaptionsschichten setzen aus den Datenfragmenten die einzelnen Datenströme zusammen, die an die Anwendungen des elektronischen Postsystems (Sprache/Audio, Video, Daten, Steuer) weitergeleitet werden.

## Patentansprüche

1. Verfahren zum Speichern, Suchen und Abspielen von hochkomprimierten audiovisuellen Informationen und Datenfiles eines elektronischen Multimediapostssystems unter Verwendung eines Multimedia-Multiplexing- und Multimedia-Steuerungs-Protokolls mit den folgenden Verfahrensschritten:
a) Multimedia-Informationströme werden in einem ersten separaten virtuellen Steuerkanal gemäß ITU-T H.245 zum Ermöglichen von flexibler Zuordnung und gleichzeitiger Behandlung von mehreren Audio/Sprach, Video und Datenkanälen für Multimedia Kommunikation gesteuert;
b) Video- und/oder Audio/Sprach- und/oder Dateninformationen und/oder Steuerinformation werden zum Ermöglichen flexibler Zuordnung von Kanalkapazitäten entsprechend der momentanen Bedürfnisse der beim genannten Steuern zugeordneten Kanäle nach ITU-T H.223 gemultiplext bzw. demultiplext;
c) Videosignale werden - vorzugsweise gemäß ITU-T H.263 - komprimiert und kodiert, bzw. dekomprimiert und dekodiert;
d) die Audio- bzw. Sprachsignale werden unter Verwendung eines hochkomprimierenden Sprachkompressionsalgorithmus komprimiert bzw. dekomprimiert;
e) das elektronische Multimediapostssystem wird über einen zweiten separaten virtuellen Steuerkanal gesteuert.

2. Einrichtung zum Speichern, Suchen und Abspielen von hochkomprimierten audiovisuellen Informationen und Datenfiles eines elektronischen Multimediapostssystems unter Verwendung eines Multimedia-Multiplexing- und Multimedia-Steuerungs-Protokolls,
- mit einer Informationsstromsteuerung zum Steuern der Multimedia-Informationströme in einem separaten virtuellen Steuerkanal gemäß ITU-T H.245, um eine flexible Zuordnung und die gleichzeitige Behandlung mehrerer Audio/Sprach-, Video- und Datenkanäle für Multimedia Kommunikation zu ermöglichen;
- mit einem Multiplexer und Demultiplexer zum Multiplexen bzw. Demultiplexen von Video- und/oder Audio/Sprach- und/oder Dateninformationen und/oder Steuerinformation nach ITU-T H.223, um eine flexible Zuordnung von Kanalkapazitäten entsprechend der momentanen Bedürfnisse der durch die genannte Steuerung zugeordneten Kanäle zu ermöglichen;
- mit einer Videokompressions- und Kodierungsvorrichtung zum Komprimieren und Kodieren und mit einer Video-Dekompressions- und Dekodierungsvorrichtung zum Dekomprimieren und Dekodieren von Videosignalen - vorzugsweise gemäß ITU-T H.263;
- mit einer Audio/Sprachkompressions- und Audio/Sprachdekompressionsvorrichtung zum Komprimieren bzw. Dekomprimieren von Audio- bzw. Sprachsignalen mit einem hochkomprimierenden Sprachkompressionsalgorithmus;
- mit einer Systemsteuerung zum Steuern des elektronischen Multimediapostssystems über einen zweiten separaten virtuellen Steuerkanal; und
- mit mindestens einem Kommunikationsnetzzugang.

3. Einrichtung nach Anspruch 2, **dadurch gekennzeichnet, daß** der zweite separate virtuelle Steuerkanal ein zusätzlich eröffneter virtueller Datenkanal gemäß ITU-T H.245 ist.

4. Einrichtung nach einem der Ansprüche 2 und 3, **dadurch gekennzeichnet, daß** die Audio/Sprachkompressions- und Audio/Sprachdekompressionsvorrichtung mindestens mit einem Sprachkompressionsalgorithmus nach ITU-T G.723.1, ITU-T G.729, ITU-T G.728, ITU-T G.722, ISO/IEC 11172-3 oder nach ITU-T G.4kbit/s betreibbar ist.

5. Einrichtung nach einem der Ansprüche 2 bis 4, **gekennzeichnet durch** einen Netzzugang für ein analoges Telefonnetz mit ITU-T V.34 und V.8bis.

6. Einrichtung nach einem der Ansprüche 2 bis 5, **gekennzeichnet durch** mindesten einen Netzzugang für ein Mobilfunknetz.

7. Einrichtung nach einem der Ansprüche 2 bis 6, **gekennzeichnet durch** mindesten einen Netzzugang für ein diensteintegrierendes Digitalnetz.

8. Einrichtung nach einem der Ansprüche 2 bis 7, **dadurch gekennzeichnet, daß** der zweite separate virtuelle Steuerkanal mit Hilfe von Mehrfrequenztonsignalen im Audiokanal realisiert ist.

9. Einrichtung nach einem der Ansprüche 2 bis 8, **dadurch gekennzeichnet, daß** die Audio/Sprachkompressions- und Audio/Sprachdekompressionsvorrichtung mindestens mit einem Sprachkompressionsalgorithmus nach ITU-T G.723.1, ITU-T G.729, ITU-T G.728, ITU-T G.722, ISO/IEC 11172-3 oder ITU-T G.4kbit/s betreibbar ist.

## Claims

1. Method for storing, searching for and reproducing highly compressed audio-visual information and data files in an electronic multimedia mail system using a multimedia multiplexing and multimedia control protocol, having the following method steps:
a) multimedia information streams are controlled in a first separate virtual control channel in accordance with ITU-T H.245 to permit flexible allocation and simultaneous handling of a plurality of audio/voice, video and data channels for multimedia communication;
b) video and/or audio/voice and/or data information and/or control information is multiplexed and demultiplexed in accordance with ITU-T H.223 to permit flexible allocation of channel capacities on the basis of the current requirements of the channels allocated during said control;
c) video signals are compressed and coded and decompressed and decoded, preferably in accordance with ITU-T H.263;
d) the audio and voice signals are compressed and decompressed using a highly compressive voice compression algorithm;
e) the electronic multimedia mail system is controlled via a second separate virtual control channel.

2. Device for storing, searching for and reproducing highly compressed audio-visual information and data files in an electronic multimedia mail system using a multimedia multiplexing and multimedia control protocol,
- having an information stream controller for controlling the multimedia information streams in a separate virtual control channel in accordance with ITU-T H.245 in order to permit flexible allocation and simultaneous handling of a plurality of audio/voice, video and data channels for multimedia communication;
- having a multiplexer and demultiplexer for multiplexing and demultiplexing video and/or audio/voice and/or data information and/or control information in accordance with ITU-T H.223 in order to permit flexible allocation of channel capacities on the basis of the current requirements of the channels allocated by said controller;
- having a video compression and coding apparatus for compressing and coding and having a video decompression and decoding apparatus for decompressing and decoding video signals, preferably in accordance with ITU-T H.263;
- having an audio/voice compression and audio/voice decompression apparatus for compressing and decompressing audio and voice signals using a highly compressive voice compression algorithm;
- having a system controller for controlling the electronic multimedia mail system via a second separate virtual control channel; and
- having at least one communication network access.

3. Device according to Claim 2, **characterized in that** the second separate virtual control channel is an additionally opened virtual data channel in accordance with ITU-T H.245.

4. Device according to one of Claims 2 and 3, **characterized in that** the audio/voice compression and audio/voice decompression apparatus can be operated at least using a voice compression algorithm in accordance with ITU-T G.723.1, ITU-T G.729, ITU-T G.728, ITU-T G.722, ISO/IEC 11172-3 or in accordance with ITU-T G.4kbit/s.

5. Device according to one of Claims 2 to 4, **characterized by** a network access for an analogue telephone network with ITU-T V.34 and V.8bis.

6. Device according to one of Claims 2 to 5, **characterized by** at least one network access for a mobile radio network.

7. Device according to one of Claims 2 to 6, **characterized by** at least one network access for an integrated services digital network.

8. Device according to one of Claims 2 to 7, **characterized in that** the second separate virtual control channel is produced using dual-tone multifrequency signals in the audio channel.

9. Device according to one of Claims 2 to 8, **characterized in that** the audio/voice compression and audio/voice decompression apparatus can be operated at least using a voice compression algorithm in accordance with ITU-T G.723.1, ITU-T G.729, ITU-T G.728, ITU-T G.722, ISO/IEC 11172-3 or ITU-T G.4kbit/s.

## Revendications

1. Procédé pour la mémorisation, la recherche et la reproduction d'informations et de fichiers de données audiovisuels fortement compressés d'un système de courrier électronique multimédia à l'aide d'un protocole de multiplexage multimédia et de commande multimédia, comprenant les étapes suivantes :
a) les flux d'information multimédia sont commandés dans un premier canal de commande virtuel séparé selon ITU-T H.245 de manière à permettre une affectation souple et un traitement simultané de plusieurs canaux audio/parole, vidéo et de données pour la communication multimédia ;
b) les informations vidéo et/ou audio/parole et/ou de données et/ou l'information de commande font l'objet d'un multiplexage resp. d'un démultiplexage selon ITU-T H.223 de manière à permettre une affectation souple de capacités de canal selon les besoins momentanés des canaux affectés au moment de ladite commande ;
c) les signaux vidéo sont compressés et codés resp. décompressés et décodés - de préférence selon ITU-T H.263 ;
d) les signaux audio resp. de parole sont compressés resp. décompressés à l'aide d'un algorithme de compression de la parole à compression élevée ;
e) le système de courrier électronique multimédia est commandé par l'intermédiaire d'un second canal de commande virtuel séparé.

2. Dispositif pour la mémorisation, la recherche et la reproduction d'informations et de fichiers de données audiovisuels fortement compressés d'un système de courrier électronique multimédia à l'aide d'un protocole de multiplexage multimédia et de commande multimédia,
- comprenant une commande de flux d'information pour la commande des flux d'information multimédia dans un canal de commande virtuel séparé selon ITU-T H.245 de manière à permettre une affectation souple et un traitement simultané de plusieurs canaux audio/parole, vidéo et de données pour la communication multimédia ;
- comprenant un multiplexeur et un démultiplexeur pour le multiplexage resp. le démultiplexage d'informations vidéo et/ou audio/parole et/ou de données et/ou de l'information de commande selon ITU-T H.223 de manière à permettre une affectation souple de capacités de canal selon les besoins momentanés des canaux affectés au moment de ladite commande ;
- comprenant un dispositif de compression et de codage vidéo pour la compression et le codage et comprenant un dispositif de décompression et de décodage vidéo pour la décompression et le décodage de signaux vidéo ― de préférence selon ITU-T H. 263 ;
- comprenant un dispositif de compression audio/parole et de décompression audio/parole pour la compression resp. la décompression de signaux audio resp. de parole avec un algorithme de compression de la parole à compression élevée ;
- comprenant une commande système pour commander le système de courrier électronique multimédia par l'intermédiaire d'un second canal de commande virtuel séparé ; et
- comprenant au moins un accès à un réseau de communication.

3. Dispositif selon la revendication 2, **caractérisé en ce que** le second canal de commande virtuel séparé est un canal de données virtuel instauré en supplément selon ITU-T H.245.

4. Dispositif selon l'une des revendications 2 et 3, **caractérisé en ce que** le dispositif de compression audio/parole et le dispositif de décompression audio/parole est exploitable, au moins, avec un algorithme de compression de la parole selon ITU-T G.723.1, ITU-T G.729, ITU-T G. 728, ITU-T G. 722, ISO/IEC 11172-3 ou selon ITU-T G.4 kbit/s.

5. Dispositif selon l'une des revendications 2 à 4, **caractérisé par** un accès au réseau conçu pour un réseau téléphonique analogique avec ITU-T V.34 et V.8bis.

6. Dispositif selon l'une des revendications 2 à 5, **caractérisé par** au moins un accès au réseau conçu pour un réseau radiotéléphonique mobile.

7. Dispositif selon l'une des revendications 2 à 6, **caractérisé par** au moins un accès au réseau conçu pour un réseau numérique à intégration de services.

8. Dispositif selon l'une des revendications 2 à 7, **caractérisé en ce que** le second canal de commande virtuel séparé est réalisé à l'aide de signaux vocaux à plusieurs fréquences dans le canal audio.

9. Dispositif selon l'une des revendications 2 à 8, **caractérisé en ce que** le dispositif de compression audio/parole et de décompression audio/parole est exploitable, au moins, avec un algorithme de compression de la parole selon ITU-T G.723.1, ITU-T G.729, ITU-T G. 728, ITU-T G. 722, ISO/IEC 11172-3 ou ITU-T G.4 kbit/s.
